# EUROPEAN PATENT APPLICATION

(11) **EP 2 985 180 A1**
(43) Date of publication of application: **17.02.2016**
(21) Application number: 15175972.7
(22) Date of filing: 09.07.2015
(51) Int. Cl.: B60Q 1/00, F21S 8/10, F21Y 111/00, F21Y 101/00

(54) **LIGHT SOURCE UNIT AND VEHICLE LAMP**

(30) Priority: 11.07.2014 JP 2014143523
(71) Applicant: Koito Manufacturing Co., Ltd., Tokyo 108-8711 (JP)
(72) Inventor: SUDA, Takafumi, Shizuoka-shi, Shizuoka (JP); SATO, Hiroyuki, Shizuoka-shi, Shizuoka (JP)
(74) Representative: Grünecker Patent- und Rechtsanwälte PartG mbB

(57) **Abstract**

A light source unit (6) includes a base body (7) having a plurality of surfaces (7a, 7b, 7c) and formed in a three-dimensional shape, a first light source (8), and a second light source (9) disposed in front of the lamp from the first light source (8). A first placement surface (7a) is formed on a surface of the base body (7) and a second placement surface (7b) is formed on a surface of the base body (7) intersecting the first placement surface (7a). The first light source (8) is placed on the first placement surface (7a) and the second light source (9) is placed on the second placement surface (7b). A conductive part (12) is connected to the second light source (9). The conductive part (12) is disposed along a surface of the base body (7), on which the first placement surface (7a) is not formed. The conductive part (12) causes power to be supplied to the second light source (9) from the external power supply.

## Description

### BACKGROUND

### TECHNICAL FIELD

The technical field of the present invention relates to a light source unit and a vehicle lamp including the light source unit. Here, the light source unit includes a reflector having a reflective surface for reflecting light and at least two light sources.

### BACKGROUND ART

Patent Document 1: Japanese Patent Laid-Open Publication No. 2004-111297

There is a vehicle lamp that includes a reflector having a reflective surface for reflecting light and a plurality of light sources (e.g., see Patent Document 1).

The vehicle lamp disclosed in Patent Document 1 has a configuration that light emitted from a first light source is reflected in the reflective surface of the reflector and irradiated toward the front and light emitted from a second light source is irradiated toward the front.

In the vehicle lamp disclosed in Patent Document 1, the light emitted from the first light source and the second light source is irradiated in a wide range toward the front, so that the expansion of the irradiation range of light is achieved.

By such expansion of the irradiation range of light, a vehicle driver's visibility is improved and the visibility from other vehicle's driver or pedestrian or the like is improved.

In the vehicle lamp disclosed in Patent Document 1, a plurality of first light sources is provided on an outer peripheral surface of a fin part serving as a base body and arranged in a state of being spaced at equal intervals in a circumferential direction, a second light source is disposed on a front surface of the fin part, and a plurality of reflectors is mounted on the outer peripheral surface of the base body in a state of being adjacent to each other in the circumferential direction.

In this way, in the vehicle lamp disclosed in Patent Document 1, a plurality of reflectors is located on the outer peripheral surface of the base body so as to be in adjacent to each other in the circumferential direction. Accordingly, it is not easy to secure a space for the power-feeding structure to the second light source positioned in front of the first light sources. Further, there is a risk of causing an increase in the size of the vehicle lamp.

### SUMMARY

Therefore, the present invention has been made to solve the above-described problem and an object thereof is to achieve the miniaturization by effectively using an arrangement space for the power-feeding structure to the second light source.

A vehicle lamp (1) according to an exemplary embodiment comprises:
a reflector (2) having a reflective surface (2a) adapted to reflect light; and
a light source unit (6) having at least one light source adapted to emit light toward the reflector (2),
wherein the light source unit (6) comprises a first light source (8) adapted to emit light toward the reflector (2), a second light source (9) disposed in front of the lamp from the first light source (8) and the base body (7) extending in a longitudinal direction,
a first placement surface (7a) is formed on an outer peripheral surface of the base body (7) and a second placement surface (7b) is formed on a surface of the base body intersecting the first placement surface (7a),
the first light source (8) is placed on the first placement surface (7a) and the second light source (9) is placed on the second placement surface (7b),
a conductive part (12) is disposed along the base body (7) and connected to the second light source (9), and
power is supplied to the second light source (9) from an external power supply via the conductive part (12).

With this configuration, power is supplied from an external power supply to the second light source via the conductive part disposed along the base body.

It is preferable that the conductive part is a flexible printed wiring substrate (12), a connector (15) adapted to supply power from the external power supply is connected to the flexible printed wiring substrate (12), and the connector (15) is disposed on the back side of the reflector (2).

With this configuration, a space is effectively utilized for arrangement of the connector.

It is preferable that a third placement surface (7c) is formed in 180° opposite side position of the first placement surface (7a) on the outer peripheral surface of the base body (7), a third light source (10) is placed on the third placement surface (7c), and the conductive part (12) is disposed between the first placement surface (7a) and the third placement surface (7c).

With this configuration, the conductive part does not interfere with the first light source and the third light source.

It is preferable that the vehicle lamp comprises:
a shade (16) having a transmitting opening (17a) and being adapted to shield a portion of the light emitted from at least the first light source (8),
wherein the light emitted from the second light source (9) is irradiated through the transmitting opening (17a).

With this configuration, a portion of light is shielded by the shade when light is emitted from the first light source, and light is irradiated through the transmitting opening of the shade when light is emitted from the second light source.

It is preferable that the vehicle lamp comprises:
a control member (20) adapted to control the light emitted from the second light source (9),
wherein a convex or concave shade-side engaging portion (19) is formed on the shade (16),
a concave or convex member-side engaging portion (23a) is formed on the control member (20) and engaged with the shade-side engaging portion (19), and
the shade-side engaging portion (19) and the member-side engaging portion (23a) are engaged, so that the control member (20) is coupled to the shade (16).

With this configuration, the mounting of the control member to the shade is facilitated.

A light source unit (6) according to an exemplary embodiment, comprising:
a base body (7) having a plurality of surfaces and formed in a three-dimensional shape;
a first light source (8); and
a second light source (9) disposed in front of the lamp from the first light source (8);
wherein a first placement surface (7a) is formed on a surface of the base body (7) and a second placement surface (7b) is formed on a surface of the base body (7) intersecting the first placement surface (7a),
the first light source (8) is placed on the first placement surface (7a) and the second light source (9) is placed on the second placement surface (7b),
   a conductive part (12) is connected to the second light source (9), the conductive part being disposed along a surface of the base body (7), on which the first placement surface (7a) is not formed,
a connector (15) adapted to supply power from an external power supply is connected to the conductive part (12), and
the conductive part (12) causes power to be supplied to the second light source (9) from the external power supply via the connector (15).

With this configuration, power is supplied from an external power supply to the second light source via the conductive part disposed along the base body.

According to the present invention, power is supplied from an external power supply to the second light source via the conductive part disposed along the base body. Therefore, an arrangement space for the power-feeding structure to the second light source is effectively used, so that the miniaturization can be achieved.

### BRIEF DESCRIPTION OF THE DRAWINGS

Fig. 1 is a schematic front view of the vehicle lamp in a state where a cover is omitted.
Fig. 2 is a schematic sectional view taken along a line II-II in Fig. 1.
Fig. 3 is a schematic sectional view taken along a line III-III in Fig. 1.

### DETAILED DESCRIPTION

Hereinafter, an exemplary embodiment of a light source unit and a vehicle lamp according to the present invention will be described with reference to the accompanying drawings.

The exemplary embodiment described below is applied to a combination lamp of a headlamp for irradiating light toward the front and a daytime running lamp serving as a daytime marker lamp. Meanwhile, the present invention can be widely applied to various combination lamps which have a combined function of two or more lamps of various lamps such as a headlamp, a tail lamp, a clearance lamp, a turn signal lamp, a stop lamp, a daytime running lamp, a cornering lamp, a hazard lamp, a position lamp, a back lamp, and a fog lamp.

For example, the vehicle lamp 1 is mounted and arranged on both left and right ends on the front end portion of a vehicle body (not shown), respectively.

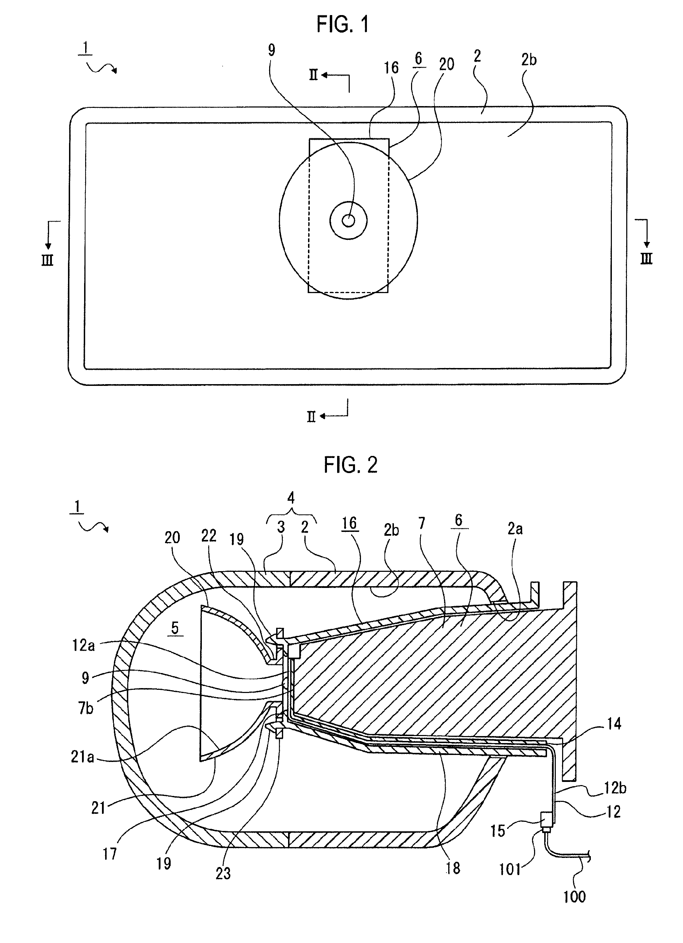

The vehicle lamp 1 includes a reflector 2 having a recess opened to the front and a cover 3 for closing the opening of the reflector 2 (see Fig. 1 to Fig. 3). A lamp housing 4 is configured by the reflector 2 and the cover 3. An internal space of the lamp housing 4 is formed as a lamp chamber 5.

In addition, the vehicle lamp 1 includes an outer lamp housing (not shown) and an outer cover for covering an opening of the outer lamp housing. The lamp housing 4 may be configured to be disposed in a space that is formed by the outer lamp housing and the outer cover.

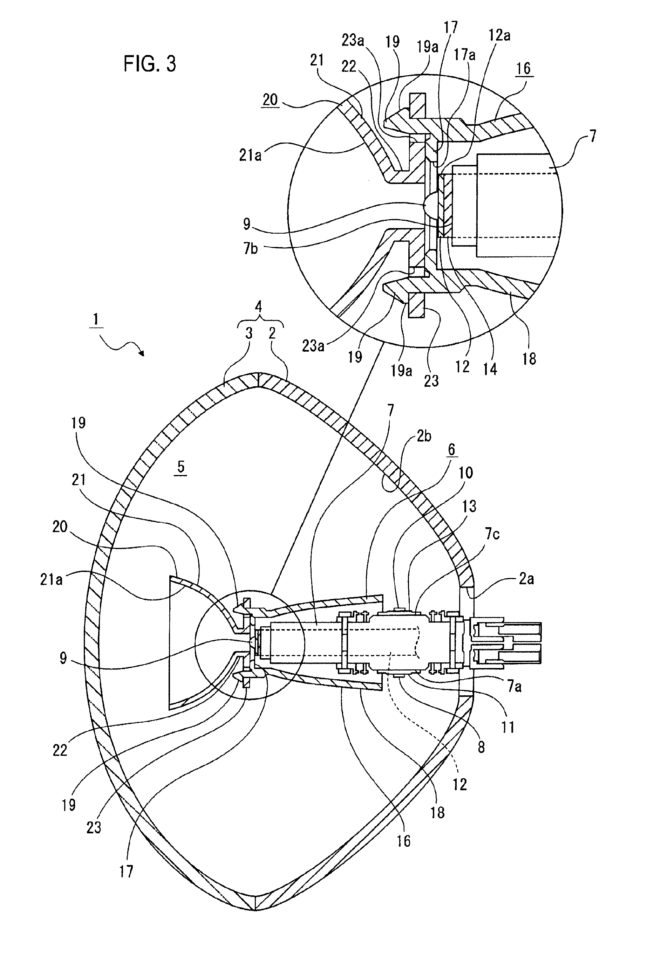

An insertion hole 2a is formed at the central portion of the rear end portion of the reflector 2 (see Fig. 2 and Fig. 3). An inner surface of the reflector 2 is formed as a reflective surface 2b for reflecting light.

A portion other than the rear end portion of the light source unit 6 is disposed in the lamp chamber 5. The light source unit 6 includes a columnar base body 7 extending in a longitudinal direction, and a first light source 8, a second light source 9 and a third light source 10, which are placed on the base body 7, respectively. A portion near the rear end portion of the light source unit 6 is coupled to a coupling portion (not shown) provided at an opening edge of the insertion hole 2a of the reflector 2, so that the light source unit 6 is mounted to the reflector 2. Meanwhile, the light source unit 6 may be mounted to the outer lamp housing.

The base body 7 is formed by the die casting of a metallic material with high heat dissipation, for example, an aluminum material. In addition to serving as a placement member for placing the first light source 8, the second light source 9 and the third light source 10, the base body 7 also serves as a heat dissipation member (heat sink) for dissipating heat that is generated during the lighting of the first light source 8, the second light source 9 and the third light source 10.

A first placement surface 7a facing sideways is formed on a substantially central portion in the longitudinal direction of the outer peripheral surface of the base body 7. A second placement surface 7b is formed on the front surface of the base body 7. A third placement surface 7c facing sideways is formed in 180° opposite side position of the first placement surface 7a on the outer peripheral surface of the base body 7.

As the first light source 8, the second light source 9 and the third light source 10, for example, a light emitting diode (LED) is used. The first light source 8 and the third light source 10 are, for example, used as a light source for a low-beam or a high-beam headlamp. The second light source 9 is, for example, used as a light source for a daytime running lamp.

The first light source 8 is placed on the first placement surface 7a in a state of being mounted on a substrate 11. The second light source 9 is placed on the second placement surface 7b in a state of being mounted on one end part 12a of a flexible printed wiring substrate 12 serving as a conductive part. The third light source 10 is placed on the third placement surface 7c in a state of being mounted on a substrate 13. Accordingly, the first light source 8 and the third light source 10 are in a state of facing the opposite direction in the lateral direction and the second light source 9 is in a state of facing forward.

Meanwhile, in the foregoing description, an example has been illustrated where the flexible printed wiring substrate 12 is used as the conductive part. However, the conductive part is not limited to the flexible printed wiring substrate 12. Other means capable of supplying power, such as a bus bar or a harness, may be used as the conductive part.

A connection line (not shown) is connected to the substrate 11 having the first light source 8 mounted thereon and the substrate 13 having the third light source 10 mounted thereon, respectively. The connection line is connected to an external power supply (not shown). Accordingly, power is supplied from the external power supply to the first light source 8 and the third light source 10 via each of the substrates 11, 13.

The flexible printed wiring substrate 12 is affixed on a rigid member 14 (see Fig. 2). The rigid member 14 is fixed to the back surface of the flexible printed wiring substrate 12. The rigid member 14 is fixed by various fixation means such as thermally conductive adhesive. The flexible printed wiring substrate 12 and the rigid member 14 are in a state of being disposed along the base body 7. The flexible printed wiring substrate 12 and the rigid member 14 are arranged in a state of passing between the first placement surface 7a on which the first light source 8 is placed and the third placement surface 7c on which the third light source 10 is placed. The flexible printed wiring substrate 12 is drawn outward (rearward) through the insertion hole 2a of the reflector 2. The other end 12b thereof is positioned on the back side of the reflector 2. A connector 15 is connected to the other end 12b of the flexible printed wiring substrate 12. The rigid member 14 is formed by a high thermal conductivity material such as aluminum. Heat that is generated during the lighting of the second light source 9 is discharged from the base body 7 via the rigid member 14.

The connector 15 is mounted to the back surface of the reflector 2 or the outer lamp housing, for example. In addition, the connector 15 may be mounted to another member that is mounted to the outer lamp housing, for example.

A connection connector 101 is mounted to one end of a cable 100 and connected to the connector 15. The other end of the cable 100 is connected to an external power supply. Accordingly, power is supplied to the second light source 9 from the external power supply via the flexible printed wiring substrate 12, the connector 15, the connection connector 101 and the cable 100.

In the vehicle lamp 1 configured in this way, the connector 15 connected to the flexible printed wiring substrate 12 is disposed on the back side of the reflector 2. Therefore, an arrangement space for the connector 15 is effectively utilized, so that it is possible to achieve the miniaturization of the vehicle lamp 1. Further, the connector 15 is hardly visible from the outside of the vehicle lamp 1, so that it is possible to achieve the improvement in the design of the vehicle lamp 1.

Further, as described above, a portion of the flexible printed wiring substrate 12 is disposed between the first placement surface 7a and the third placement surface 7c that is located in 180° opposite side of the first placement surface 7a. Therefore, the flexible printed wiring substrate 12 does not interfere with the first light source 8 and the third light source 10 and an arrangement space for the flexible printed wiring substrate 12 is effectively utilized. As a result, it is possible to achieve the miniaturization of the vehicle lamp 1.

In the vehicle lamp 1, the first light source 8 and the third light source 10 are simultaneously turned on. When the first light source 8 and the third light source 10 are turned on, the second light source 9 is turned off. Further, when the second light source 9 is turned on, the first light source 8 and the third light source 10 are turned off. Accordingly, heat that is generated during the lighting of the first light source 8, the second light source 9 and the third light source 10 is discharged from the base body 7 serving as a heat dissipation member. However, since the second light source 9 is turned off when the first light source 8 and the third light source 10 are turned on, and the first light source 8 and the third light source 10 are turned off when the second light source 9 is turned on, the maximum amount of heat that needs to be discharged by the base body 7 becomes small. Since, in this way, the maximum amount of heat that needs to be discharged by the base body 7 becomes small, sufficient heat dissipation performance by the base body 7 is secured in both the lighting of the first light source 8 and the third light source 10 and the lighting of the second light source 9. As a result, it is possible to effectively suppress the temperature rise.

Further, the base body 7 serves as a heat dissipation member also when the second light source 9 is turned on, in addition to the time when the first light source 8 and the third light source 10 are turned on. Accordingly, it is not necessary to provide a dedicated heat dissipation member for the second light source 9. As a result, it is possible to achieve the reduction in the manufacturing cost and the miniaturization of the vehicle lamp 1, correspondingly.

A shade 16 is mounted to the base body 7 (see Fig. 2 and Fig. 3). The shade 16 is integrally formed by a base surface portion 17 facing the longitudinal direction, a shielding portion 18 protruding rearward from an outer peripheral portion of the base surface portion 17, and shade-side engaging portions 19, 19, ··· protruding forward from the outer peripheral portion of the base surface portion 17. The shade-side engaging portions 19, 19, ··· are formed so as to be spaced apart in a circumferential direction.

The base surface portion 17 is formed with a transmitting opening 17a.

Each rear end on both left and right end portions of the shielding portion 18 is positioned in the vicinity of the front side of the first light source 8 and the third light source 10. The shielding portion 18 is inclined so as to be displaced outward toward the rear.

The shade-side engaging portions 19, 19, ··· can be elastically deformed with respect to the base surface portion 17. The shade-side engaging portions 19, 19, ··· have engaging claws 19a, 19a, ··· at front ends thereof.

For example, the base surface portion 17 of the shade 16 is mounted to the front end of the base body 7 by a screw fixation or the like. In the state where the shade 16 is mounted to the base body 7, the second light source 9 is disposed in the transmitting opening 17a of the base surface portion 17. The shielding portion 18 is positioned in a state of covering a substantially front half of the base body 7 from the outer peripheral side.

A control member 20 is disposed on the front side of the base body 7. For example, a reflecting mirror (reflector) is used as the control member 20.

The control member 20 is integrally formed by a bowl-shaped reflective portion 21 that is opened to the front, a cylindrical connecting portion 22 protruding rearward from the rear end of the reflective portion 21, and a coupling portion 23 protruding outward (laterally) from the rear end of the connecting portion 22. An inner surface of the reflective portion 21 is formed as a reflective surface 21a. Member-side engaging portions (engaging holes) 23a, 23a, ··· are longitudinally penetrated in the position near the outer periphery of the coupling portion 23. The member-side engaging portions 23a, 23a, ··· are formed so as to be spaced apart in the circumferential direction.

In the control member 20, the shade-side engaging portions 19, 19, ··· are elastically deformed and inserted into the member-side engaging portions 23a, 23a, ···, respectively. As the shade-side engaging portions 19, 19, ··· are elastically restored, the engaging claws 19a, 19a, ··· are engaged with the front opening edge of the member-side engaging portions 23a, 23a, ···, respectively. In this way, the control member 20 is mounted to the shade 16. In the state where the control member 20 is mounted to the shade 16, the connecting portion 22 of the control member 20 is positioned on the front side of the transmitting opening 17a of the shade 16. Accordingly, light emitted from the second light source 9 is irradiated to the front through the connecting portion 22.

In the foregoing description, an example has been illustrated where the convex shade-side engaging portions 19, 19, ··· are provided on the shade 16, the concave member-side engaging portions 23a, 23a, ··· are formed on the control member 20, and the control member 20 is mounted to the shade 16 in such a way that the shade-side engaging portions 19, 19, ··· are inserted into the member-side engaging portions 23a, 23a, ···. However, on the contrary, the concave shade-side engaging portions may be formed on the shade, the convex member-side engaging portions may be provided on the control member, and the control member may be mounted to the shade in such a way that the member-side engaging portions are inserted into the shade-side engaging portions.

As described above, in the vehicle lamp 1, the shade-side engaging portions 19, 19, ··· and the member-side engaging portions 23a, 23a, ··· are engaged, so that the control member 20 is mounted to the shade 16. Therefore, the mounting of the control member 20 to the shade 16 is facilitated. As a result, it is possible to achieve the improvement in the operability of the mounting work and the rapidity of the mounting work.

In the vehicle lamp 1 configured as described above, when light for the headlamp is emitted from the first light source 8 and the third light source 10, the light emitted is directed to the reflective surface 2b of the reflector 2 and reflected in the reflective surface 2b. Then, the light is transmitted through the cover 3 and irradiated to the front. At this time, a portion of the light emitted from the first light source 8 and the third light source 10 is shielded by the shade 16, so that a predetermined light distribution pattern as the light for the headlamp is formed.

On the other hand, when light for the daytime running lamp is emitted from the second light source 9, the light emitted is directed to the front from the transmitting opening 17a of the shade 16 through the connecting portion 22 of the control member 20. At this time, a portion of the light is reflected in the reflective surface 21 a of the reflective portion 21 of the control member 20, so that the light is transmitted through the cover 3 and irradiated to the front. Further, the other portion of the light emitted from the second light source 9 is not reflected in the reflective surface 21a of the reflective portion 21, so that this portion is transmitted through the cover 3 and irradiated to the front. It should be noted that a lens for controlling the light distribution by refracting the light may be used as the control member 20.

When light is emitted from the first light source 8 and the third light source 10 as described above, a portion of the light is shielded by the shade 16 to form a predetermined light distribution pattern. When light is emitted from the second light source 9 as described above, the light is irradiated to the front through the transmitting opening 17a formed in the shade 16. Therefore, a portion of the light emitted from the first light source 8 and the third light source 10 is shielded by the shade 16, so that a good light distribution pattern can be formed. Further, the light emitted from the second light source 9 is not shielded by the shade 16, so that a good emission state of light from the second light source 9 can be secured.

As described above, in the vehicle lamp 1, the first placement surface 7a on which the first light source 8 is placed is formed on the outer peripheral surface of the base body 7 and the second placement surface 7b on which the second light source 9 is placed is formed on the front surface of the base body 7 intersecting the first placement surface 7a. Further, power is supplied to the second light source 9 from the external power supply via the flexible printed wiring substrate 12 disposed along the base body 7.

Therefore, an arrangement space for the power-feeding structure to the second light source 9 is effectively used, so that the miniaturization of the vehicle lamp 1 can be achieved.

Meanwhile, in the foregoing description, an example has been illustrated where the first light source 8 and the third light source 10 are provided as a light source for a headlamp. However, the number of the light source for the headlamp is optional. For example, only one light source may be provided, or three or more light sources may be provided.

## Claims

1. A light source unit (6) comprising:
a base body (7) having a plurality of surfaces and formed in a three-dimensional shape;
a first light source (8); and
a second light source (9) disposed in front of the lamp from the first light source (8);
wherein a first placement surface (7a) is formed on a surface of the base body (7) and a second placement surface (7b) is formed on a surface of the base body (7) intersecting the first placement surface (7a),
the first light source (8) is placed on the first placement surface (7a) and the second light source (9) is placed on the second placement surface (7b),
a conductive part (12) is connected to the second light source (9), the conductive part being disposed along a surface of the base body (7), on which the first placement surface (7a) is not formed, and
the conductive part (12) causes power to be supplied to the second light source (9) from the external power supply.

2. The light source unit (6) wherein a connector (15) adapted to supply power from an external power supply is connected to the conductive part (12), and
the conductive part (12) causes power to be supplied to the second light source (9) from the external power supply via the connector (15).

3. A vehicle lamp (1) comprising:
a reflector (2) having a reflective surface (2a) adapted to reflect light; and
the light source unit (6) according to claim 1 or 2,
wherein the first light source (8) is adapted to emit light toward the reflector (2), and the base body (7) extends in a longitudinal direction.

4. The vehicle lamp according to claim 3, wherein the conductive part is a flexible printed wiring substrate (12), and the connector (15) is disposed on the back side of the reflector (2).

5. The vehicle lamp according to claim 3 or 4, wherein the first placement surface (7a) is formed on an outer peripheral surface of the base body (7),
a third placement surface (7c) is formed in 180° opposite side position of the first placement surface (7a) on the outer peripheral surface of the base body (7),
a third light source (10) is placed on the third placement surface (7c), and
the conductive part (12) is disposed between the first placement surface (7a) and the third placement surface (7c).

6. The vehicle lamp according to any one of claims 3 to 5, comprising:
a shade (16) having a transmitting opening (17a) and being adapted to shield a portion of the light emitted from at least the first light source (8),
wherein the light emitted from the second light source (9) is irradiated through the transmitting opening (17a).

7. The vehicle lamp according to claim 6, comprising:
a control member (20) adapted to control the light emitted from the second light source (9),
wherein a convex or concave shade-side engaging portion (19) is formed on the shade (16),
a concave or convex member-side engaging portion (23a) is formed on the control member (20) and engaged with the shade-side engaging portion (19), and
the shade-side engaging portion (19) and the member-side engaging portion (23a) are engaged, so that the control member (20) is coupled to the shade (16).
